# EUROPÄISCHE PATENTSCHRIFT

(11) **EP 1 442 851 B1**
(45) Veröffentlichungstag und Bekanntmachung des Hinweises auf die Patenterteilung: **12.10.2005**
(21) Anmeldenummer: 03028539.9
(22) Anmeldetag: 11.12.2003
(51) Int. Cl.: B26F 1/44, B31B 1/25

(54) **Stanz- und Rill-Gegendruckplatte und Verfahren zu deren Herstellung und Gebrauch sowie damit ausgestattete Maschine**
Matrix for cutting and creasing, method for its manufacture, its use and machine equipped with the matrix
Matrice pour la coupe et le rainurage, méthode pour sa manufacture, son usage et machine équipée d'une telle matrice

(30) Priorität: 28.01.2003 DE 10303178
(43) Veröffentlichungstag der Anmeldung: 04.08.2004
(73) Patentinhaber: Heidelberger Druckmaschinen Aktiengesellschaft, 69115 Heidelberg (DE)
(72) Erfinder: Berens, Berthold, 49828 Esche (DE); Friedrichs, Jens, 69151 Neckargemünd (DE); Pazdzior, Thimo, 69181 Leimen (DE); Voss, Werner, 48527 Nordhorn (DE)

(56) Entgegenhaltungen:
- EP-A- 0 323 673
- US-A- 3 847 036
- US-A- 4 100 844

## Beschreibung

Die vorliegende Erfindung bezieht sich auf eine Stanz- und Rill-Gegendruckplatte, die aus einem Metallblech hergestellt ist, nach dem Oberbegriff des Anspruchs 1, auf der Grundlage der US-3,847,036 oder US-4,100,844. Des Weiteren bezieht sich die Erfindung auf ein Verfahren zur Herstellung einer Stanz- und Rill-Gegendruckplatte aus einem Metallblech, nach dem Oberbegriff des Anspruchs 4. Außerdem bezieht sich die Erfindung auf eine Maschine zum Bearbeiten eines Bedruckstoffs, mit einer Stanz- und Rill-Gegendruckplatte, nach dem Oberbegriff des Anspruchs 6. Letztlich bezieht sich die Erfindung auf ein Verfahren zum Stanzen und Rillen eines Bedruckstoffs, nach dem Oberbegriff des Anspruchs 7.

Im Rahmen der nachfolgenden Beschreibung wird unter Stanzen sowohl ein Schneiden mit ununterbrochener Schnittlinie als auch ein Schneiden mit regelmäßig unterbrochener Schnittlinie, also ein Perforieren, verstanden.

Stanz- und Rill-Gegendruckplatten werden als Gegenstücke zu Stanz- und Rill-Werkzeugen zusammen mit diesen typischerweise für die Faltschachtelherstellung eingesetzt. Ein Stanz- und Rill-Werkzeug weist sowohl eine aus mindestens einer erhabenen Stanz-Linie bestehende Stanz-Linien-Struktur als auch eine aus mindestens einer erhabenen Rill-Linie bestehende Rill-linien-Struktur auf. Eine Stanz- und Rill-Gegendruckplatte weist eine aus mindestens einer Rill-Nut bestehende Rill-Nuten-Struktur auf, in welche das zu rillende Material beim Rillen von der Rill-Linien-Struktur hineingedrückt wird. Außerdem weist die Stanz- und Rill-Gegendruckplatte eine Oberfläche auf, in welche die Rill-Nuten-Struktur eingebracht ist und die das zu stanzende Material beim Stanzen rückseitig abstützt.

Wird aus dem Material ein Nutzen, z. B. ein Faltschachtelzuschnitt, ausgestanzt, dann setzt die Stanz-Linien-Struktur hart auf der Oberfläche der Stanz- und Rill-Gegendruckplatte auf, welche durch diese stoßartige Belastung im Laufe der Zeit verschleißt. Um die Standzeit der Stanz- und Rill-Gegendruckplatte trotzdem hinreichend hoch zu halten, ist bereits eine die Oberfläche betreffende Maßnahme bekannt. Diese Maßnahme ist in der DE 39 29 415 A1 beschrieben worden und besteht in der Herstellung der Stanz- und Rill-Gegendruckplatte aus einem Stahlblech, dessen Oberfläche auf eine 42 bis 56 HRC betragende Härte oberflächengehärtet ist. Die Verwendung dieses Stahlbleches mag zwar hinsichtlich der Standzeit vorteilhaft sein, ist jedoch hinsichtlich des Einbringens der Rill-Nuten-Struktur durch Fräsen und hinsichtlich der Eignung für ein rotativ erfolgendes Stanzen und Rillen von Nachteil. (Ein rotativ erfolgendes Stanzen und Rillen ist z. B. mittels der in der DE 100 52 777 A1 beschriebenen Vorrichtung durchführbar und das Einbringen der Rill-Nuten-Struktur durch Fräsen ist in der DE 196 10 574 C1 erwähnt.).

Da Stahl ein vergleichsweise harter Werkstoff ist, lässt er sich nicht unaufwendig fräsen. Dem Vorschub und der Spantiefe des Fräswerkzeuges sind bei der Stahlbearbeitung enge Grenzen gesetzt, zumal dieses Fräswerkzeug beim Herstellen der Rill-Nuten-Struktur dem Querschnitt der Rill-Nuten entsprechend filigran sein muss.

Aufgrund der vergleichsweise hohen Biegesteifigkeit des Werkstoffs Stahl lässt sich eine daraus bestehende Stanz- und Rill-Gegendruckplatte nur dann auf einen Werkzeugzylinder aufspannen, wie dies für das Rotationsstanzen und -rillen erforderlich ist, wenn sie vergleichsweise dünn ist. Eine geringe Dicke der Stanz- und Rill-Gegendruckplatte ist zwar bezüglich deren zum Aufspannen erforderlichen Verformbarkeit bzw. Flexibilität, jedoch nicht bezüglich der Rill-Nuten-Struktur günstig. Ist die Plattendicke zu gering, dann ist die Nuttiefe der Rill-Nuten-Struktur zwangsläufig auch gering. Für das Rillen sehr dicker Materialien, z. B. dicken Faltschachtel-Kartons, ist jedoch eine dementsprechend tiefe Rill-Nuten-Struktur notwendig.

Deshalb liegt der Erfindung die Aufgabe zugrunde, eine für rotatives Stanzen und Rillen geeignete Stanz- und Rill-Gegendruckplatte und eine damit ausgestattete Maschine zu schaffen, ein unaufwendiges Verfahren zur Herstellung dieser Stanz- und Rill-Gegendruckplatte anzugeben und ein Verfahren anzugeben, mittels welchem sich auch Bedruckstoff großer Dicke stanzen und rillen lässt.

Diese Aufgabe wird durch eine Stanz- und Rill-Gegendruckplatte mit den Merkmalen des Anspruchs 1, durch ein Herstellungsverfahren mit den Merkmalen des Anspruchs 4, eine Bedruckstoffbearbeitungsmaschine mit den Merkmalen des Anspruchs 6 und ein Stanz- und Rill-Verfahren mit den Merkmalen des Anspruchs 7 gelöst.

Unter dem Aluminiumblech wird im vorliegenden Zusammenhang ein aus Aluminium oder einer Aluminiumlegierung, z. B. AlMg₃, AlMg, bestehendes Blech verstanden. Da sich das Aluminiumblech viel leichter als ein Stahlblech von mit dem Aluminiumblech vergleichbarer Blechdicke um einen Werkzeugzylinder herumlegen bzw. -biegen lässt, ist die erfindungsgemäße Stanz- und Rill-Gegendruckplatte sehr gut für ihre Verwendung zum Rotationsstanzen und -rillen geeignet.

Bei hinsichtlich der Standzeit der Stanz- und Rill-Gegendruckplatte weist das Aluminiumblech eine hartanodisierte Deckschicht auf, deren Härte vorzugsweise mindestens 350 HV 0,05 (Mikrohärteprüfung nach Vickers - vgl. EN ISO 4516: 2002) und deren Dicke vorzugsweise mindestens 10 Mikrometer beträgt. Diese Deckschicht kann eine sehr verschleißfeste Aluminiumoxydschicht (Al₂O₃) sein, deren Härte über ihre Schichtdicke hinweg annähernd konstant ist. Das durch das Hartanodisieren oberflächenveredelte Metallblech, aus dem die Stanz- und Rillgegendruckplatte besteht, ist nicht nur gegenüber der von der (den) Stanzlinie(n) auf die Deckschicht ausgeübte Stoß- und Druckbelastung sondern auch gegenüber einem wiederholten Zusammen- und Auseinanderbiegen des Metallblechs beim Auf- und Abspannen der Stanz- und Rill-Gegendruckplatte auf und von dem Werkzeugzylinder sehr beständig. Trotz der vielen mit dem Biegen einhergehenden Lastspiele bewahrt die Stanz- und Rill-Gegendruckplatte ihre Formstabilität über einen langen Zeitraum. Aufgrunddessen, dass sich die Deckschicht durch die Oxydation des Aluminiums aus dem Metallblech-Material herausbildet, ist diese Deckschicht somit sehr fest mit dem darunterliegenden Grundmaterial, welches nachfolgend auch als Trägerschicht bezeichnet wird, verbunden. Obwohl es sich bei der an vorliegender Stelle beschriebenen Stanz- und Rill-Gegendruckplatte um eine Mehrschicht-Platte handelt, besteht bei ihr niemals die Gefahr eines Ablösens der Deckschicht von der Trägerschicht. Diese Gefahr besteht bei anderen mehrschichtigen Stanz- und Rill-Gegendruckplatten des Standes der Technik (vgl. DE 195 38 538 C1), bei denen die Deckschicht und die Trägerschicht separat voneinander geformt und erst danach, z. B. mittels Klebstoff, miteinander verbunden werden.

Bei der Erfindung wird als Metallblech ein Aluminiumblech verwendet.

Das Aluminium dieses Bleches kann selbstverständlich, wie zuvor bereits angedeutet, ein oder mehrere die Eigenschaften des Aluminiums verbessernde Legierungselemente, z. B. Magnesium, enthalten. Auf jeden Fall ist es vorteilhaft, dass sich das Aluminium bzw. dessen Legierung zur Herstellung der Rill-Nuten-Struktur einfacher spanend bearbeiten lässt, als dies Stahl täte.

Eine Deckschicht, mit welcher das Aluminiumblech durch Hartanodisieren versehen wird, ist mit vorzugsweise höchstens 150 Mikrometern und z. B. höchstens 50 Mikrometern Schichtdicke sehr dünn und erschwert die spanende Bearbeitung nicht spürbar. Eine oder jede Rill-Nut wird so tief in das Aluminiumblech eingebracht, dass die Rill-Nut die Deckschicht vollständig und eine unter der Deckschicht liegende Trägerschicht nur unvollständig durchdringt, was zur Formstabilität beiträgt. Die Rill-Nuten-Struktur, welche erst nach dem Hartanodisieren in das Aluminiumblech eingebracht wird, geht also nicht durch die Stanz- und Rill-Gegendruckplatte in ihrer gesamten Dicke hindurch. Vielmehr bleibt am Grund der Rill-Nuten-Struktur eine z. B. mindestens 0,1 Millimeter betragende Restdicke der Trägerschicht bestehen, so dass die Rill-Nuten-Struktur einen Boden hat und nur einseitig offen ist. Der Boden ist hinsichtlich einer Verwendung der Stanz- und Rill-Gegendruckplatte als Zylinderaufzug vorteilhaft. Zum Rotationsstanzen und -rillen muss die Stanz- und Rill-Gegendruckplatte auf einen Gegendruckzylinder aufgespannt werden. Beim Aufspannen der Stanz- und Rill-Gegendruckplatte ist letztere Biege- und Spannkräften ausgesetzt, welche die Gefahr nach sich zögen, dass sich die Stanz- und Rill-Gegendruckplatte in der Umgebung zum Gegendruckzylinder achsparallel verlaufender Rill-Nuten aufwölbt, wenn diese Rill-Nuten als Durchgangslöcher, d. h. ohne den Boden, gefertigt wären. Da diese Rill-Nuten gemäß der hier beschriebenen Weiterbildung stattdessen jedoch als Sacklöcher gefertigt sind, ist eine Verzugsfreiheit der Stanz- und Rill-Gegendruckplatte bei ihrem Aufspannen gewährleistet. Dadurch, dass die oder jede Rill-Nut durch Fräsen in das Aluminiumblech eingebracht wird, ist eine sehr formgenaue Fertigung des Nutprofils und insbesondere des Bodens der Nut möglich.

Die die erfindungsgemäße Stanz- und Rill-Gegendruckplatte enthaltende Maschine kann eine ausschließlich zum off-line erfolgenden Stanzen und Rillen dienende Spezialmaschine sein. Stattdessen kann die Maschine aber auch eine Druckmaschine sein, die neben mindestens einem Druckwerk auch ein Stanzwerk umfasst, das mit der erfindungsgemäßen Stanz- und Rill-Gegendruckplatte ausgestattet ist. In einer solchen Druckmaschine wird der Bedruckstoff innerhalb eines In-Line-Prozesses z. B. zuerst bedruckt und danach gestanzt und gerillt. Das Druckwerk kann ein Offset-Druckwerk oder ein z. B. als Lackierwerk eingesetztes Flexodruckwerk sein.

Mittels dem Verfahren nach Anspruch 4 lässt sich auch vergleichsweise dicker Bedruckstoff problemlos rillen, da das Aluminiumblech aufgrund seiner Materialeigenschaften eine großen Nuttiefe der Rill-Nuten-Struktur gestattet und trotzdem flexibel ist.

Die Flexibilität des Aluminiumbleches ist hinsichtlich einer Weiterbildung vorteilhaft, gemäß welcher das Verfahren als ein rotatives Bearbeitungsverfahren ausgeführt wird, bei welchem die Stanz- und Rill-Gegendruckplatte zusammen mit dem Gegendruckzylinder, auf welchem die Stanz- und Rill-Gegendruckplatte befestigt ist, rotiert. Der beim erfindungsgemäßen Verfahren zum Stanzen und Rillen verwendete Bedruckstoff kann eine Bedruckstoffbahn sein und ist vorzugsweise ein Bedruckstoffbogen, z. B. ein Kartonbogen für die Faltschachtelherstellung.

Andere funktionell und konstruktiv vorteilhafte Weiterbildungen der Erfindung ergeben sich aus der nachfolgenden Beschreibung eines bevorzugten Ausführungsbeispieles und der dazugehörigen Zeichnung.

In dieser zeigt:
- Figur 1: eine Maschine mit einem Werkzeugzylinder zum Stanzen und Rillen und einem dem Werkzeugzylinder kooperativ zugeordneten Gegendruckzylinder,
- Figur 2: den Werkzeugzylinder mit einer darauf befestigten Stanz- und Rill-Werkzeugplatte sowie den Gegendruckzylinder mit einer darauf befestigten Stanz- und Rill-Gegendruckplatte,
- Figur 3: eine Stanz-Linie und eine Rill-Linie der Stanz- und Rill-Werkzeugplatte sowie eine Mehrschicht-Bauweise und eine Rill-Nut der Stanz- und Rill-Gegendruckplatte,
- Figur 4: die Stanz- und Rill-Werkzeugplatte - abgenommen vom Werkzeugzylinder,
- Figuren 5a und 5b: die Stanz- und Rill-Gegendruckplatte - abgenommen vom Gegendruckzylinder - in verschiedenen Ansichten,
- Figur 6: eine Halte- und Spanneinrichtung des Gegendruckzylinders zum Halten und Spannen der Stanz- und Rill-Gegendruckplatte,
- Figur 7: die genannten Zylinder und eine Positionierungs-Hilfseinrichtung zum Positionieren der Stanz- und Rill-Werkzeugplatte auf dem Werkzeugzylinder,
- Figur 8: ein Greifersystem des Gegendruckzylinders zum Greifen eines Bedruckstoffbogens sowie ein Detail der Halte- und Spanneinrichtung,
- Figur 9: die Positionierungs-Hilfseinrichtung in der Draufsicht sowie
- Figur 10: den Werkzeugzylinder in der Draufsicht.

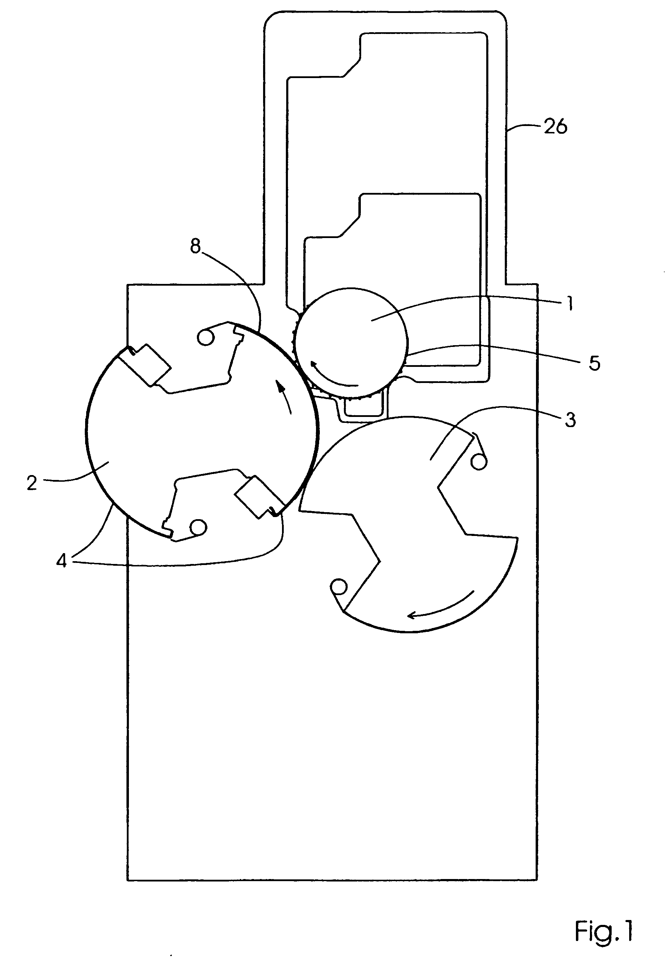

In Figur 1 ist eine bogenförmigen Bedruckstoff 8 verarbeitende Maschine 26 dargestellt. Die Maschine 26 ist eine Druckmaschine und umfasst einen Werkzeugzylinder 1, einen Gegendruckzylinder 2 und einen Bogentransportzylinder 3, der dem Gegendruckzylinder 2 in Bogentransportrichtung gesehen vorgeordnet ist. Auf dem Werkzeugzylinder 1 ist eine Stanz- und Rill-Werkzeugplatte 5 magnetisch befestigt und auf dem Gegendruckzylinder 2 ist mindestens eine Stanz- und Rill-Gegendruckplatte 4 befestigt.

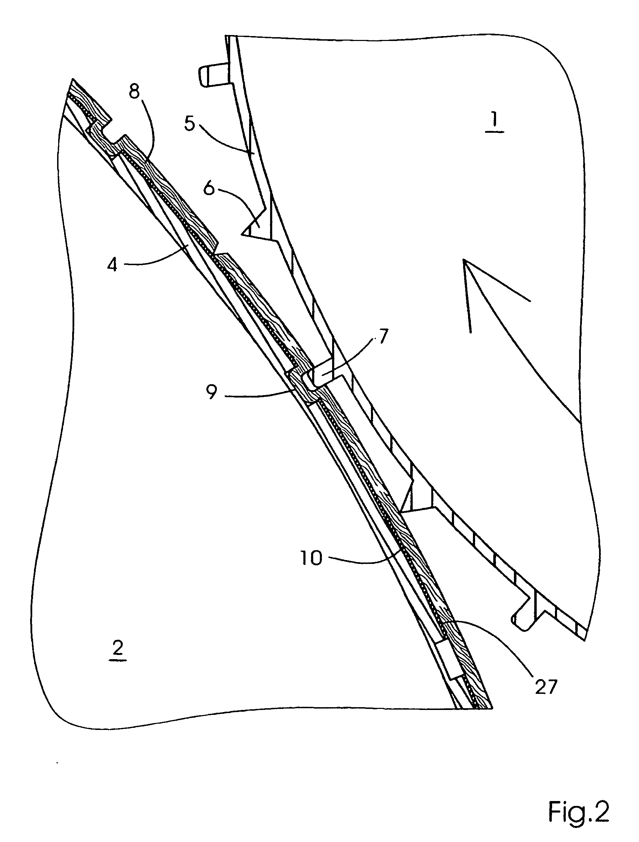

In Figur 2 ist es besser zu erkennen, wie der Bedruckstoff 8 auf der Stanz- und Rill-Gegendruckplatte 4 aufliegt und von der sich darauf abwälzenden Stanz- und Rill-Werkzeugplatte 5 in ein und demselben Arbeitsgang gestanzt und gerillt wird. Die Stanz- und Rill-Werkzeugplatte 5, welche aus einem magnetisch anziehbaren Material, z. B. Stahl, zumindest teilweise besteht, hat mindestens eine Stanz-Linie 6 und mindestens eine Rill-Linie 7 als Werkzeug-Linien. Die Stanz- und Rill-Gegendruckplatte 4 weist mindestens eine Rill-Nut 9 und eine Oberfläche 27, in welche die Rill-Nut 9 eingebracht ist, auf. Beim Stanzen und Rillen des Bedruckstoffs 8 setzt die Stanz-Linie 6, nachdem sie durch den Bedruckstoff 8 hindurchgeschnitten hat, auf der Oberfläche 27 auf und drückt die Rill-Linie 7 den Bedruckstoff 8 gleichzeitig in die Rill-Nut 9 hinein.

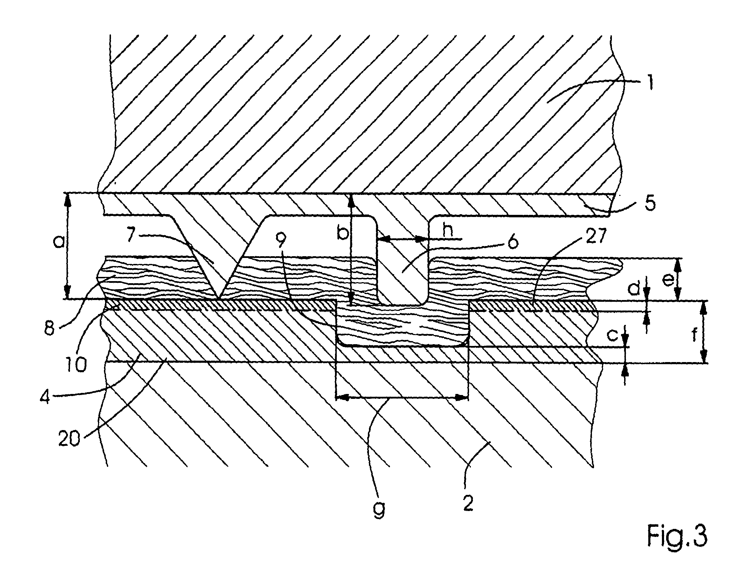

In Figur 3 ist in einem Schnitt dargestellt, dass die zweischichtige Stanz- und Rill-Gegendruckplatte 4 eine vergleichsweise harte und die Oberfläche 27 bildende Deckschicht 10 aufweist, die durch Hartanodisierung auf einer Trägerschicht 20 erzeugt worden ist und aus Aluminiumoxyd besteht. Die Deckschicht 10 weist eine mindestens 350 HV 0,05 betragende und vorzugsweise in einem Härtebereich von 500 bis 800 HV 0,05 liegende Härte sowie eine mindestens 10 Mikrometer betragende und vorzugsweise in einem Dickenbereich von 20 bis 50 Mikrometer liegende Deckschicht-Dicke d auf. Die Trägerschicht 20 ist vergleichsweise weich und weist eine im Härtebereich von 50 bis 80 HB (Brinell-Härte) liegende Härte auf. Die Trägerschicht 20 und die Deckschicht 10 ergeben zusammen eine Platten-Dicke f, die maßlich in einem von 0,5 Millimeter bis 0,7 Millimeter reichenden Bereich liegt. Die Rill-Linie 7 hat eine Rill-Linien-Höhe b, die geringfügig höher als eine Stanz-Linien-Höhe a der Stanz-Linie 6 sein kann, und eine Rill-Linien-Breite h, welche deutlich geringer als eine Rill-Nuten-Breite g der Rill-Nut 9 ist. Die Nuttiefe der Rill-Nut 9 ist geringer als die Platten-Dicke f, so dass die Rill-Nut 9 einen Nutboden mit der Boden-Dicke c aufweist, die mindestens 0,1 Millimeter beträgt. Eine Bedruckstoff-Dicke e des Bedruckstoffs 8 ist größer als 0,3 Millimeter. Der Bedruckstoff 8 ist nämlich ein sehr dicker Kartonbogen. Die Stanz- und Rill-Gegendruckplatte 4 ist aus einem Aluminiumblech gefertigt worden, indem dieses zuerst zum Zwecke der Erzeugung der aus Aluminiumoxyd bestehenden Deckschicht 10 hartanodisiert und danach durch ein spanendes Bearbeitungsverfahren, vorzugsweise Fräsen, mit der Rill-Nut 9 und weiteren solchen Rill-Nuten versehen worden ist. Da in der Figur 3 nur ein eng begrenzter Ausschnitt dargestellt ist, lässt dieser nicht erkennen, dass die beiden Platten 4, 5 auf den Umfangsoberflächen der beiden Zylinder 1, 2 liegen und sich an diese Umfangsoberflächen anschmiegend gekrümmt sind.

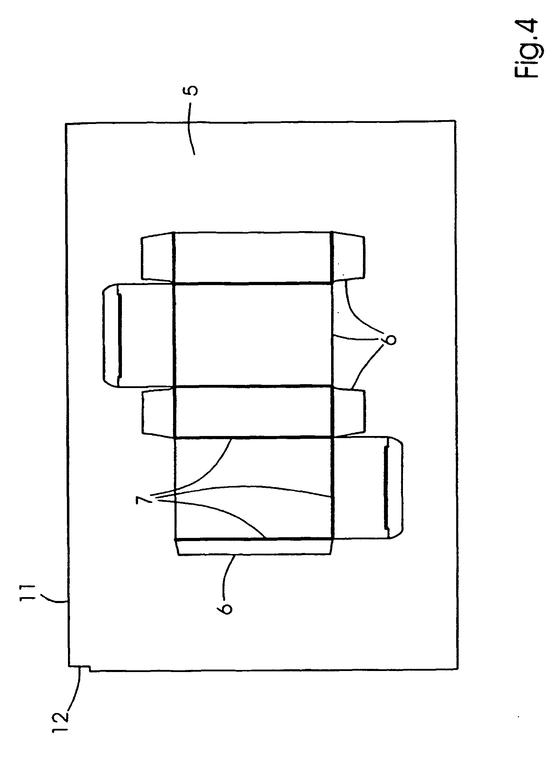

In Figur 4 ist eine Abwicklung der Stanz- und Rill-Werkzeugplatte 5 dargestellt, welche eine Vorderkante 11 und eine Seitenkante 12 aufweist. Aus dieser Abwicklung ist die genannte Stanz- und Rill-Linien-Struktur zur Herstellung eines Faltschachtel-Nutzens gut ersichtlich.

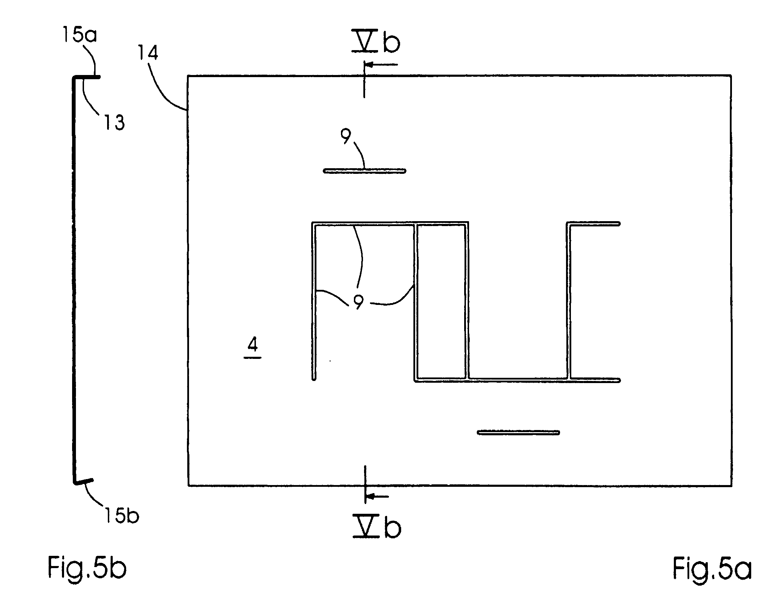

In Figur 5a ist die Stanz- und Rill-Gegendruckplatte 4 in ihrem vom Gegendruckzylinder 2 abgewickelten Zustand dargestellt. Ein Vergleich der Figur 5a mit der Figur 4 zeigt deutlich, dass die Rill-Nuten-Struktur in Figur 5a mit den Rill-Linien 7 in Figur 4 in spiegelverkehrter Weise korrespondiert.

Die Figur 5b ist eine dem Schnittlinienverlauf Vb-Vb in Figur 5a entsprechende Querschnittsdarstellung, aus der als Befestigungshaken dienende Abkantungen 15a, 15b am vorderen und hinteren Plattenende der Stanz- und Rill-Gegendruckplatte 4 ersichtlich sind. Eine vordere Anschlagfläche 13 (vgl. Figur 5b) und eine seitliche Anschlagkante 14 (vgl. Figur 5a) der Stanz- und Rill-Gegendruckplatte 4 sowie die Vorderkante 11 und die Seitenkante 12 (vgl. Figur 4), die ebenfalls als Anschlagflächen fungieren, der Stanz- und Rill-Werkzeugplatte 5 dienen einerseits zur deckungsgleichen Strukturierung der Platten 4, 5 mit den Linien und den Nuten und andererseits zur miteinander korrespondierenden Positionierung der Platten 4, 5 auf den Zylindern 1, 2.

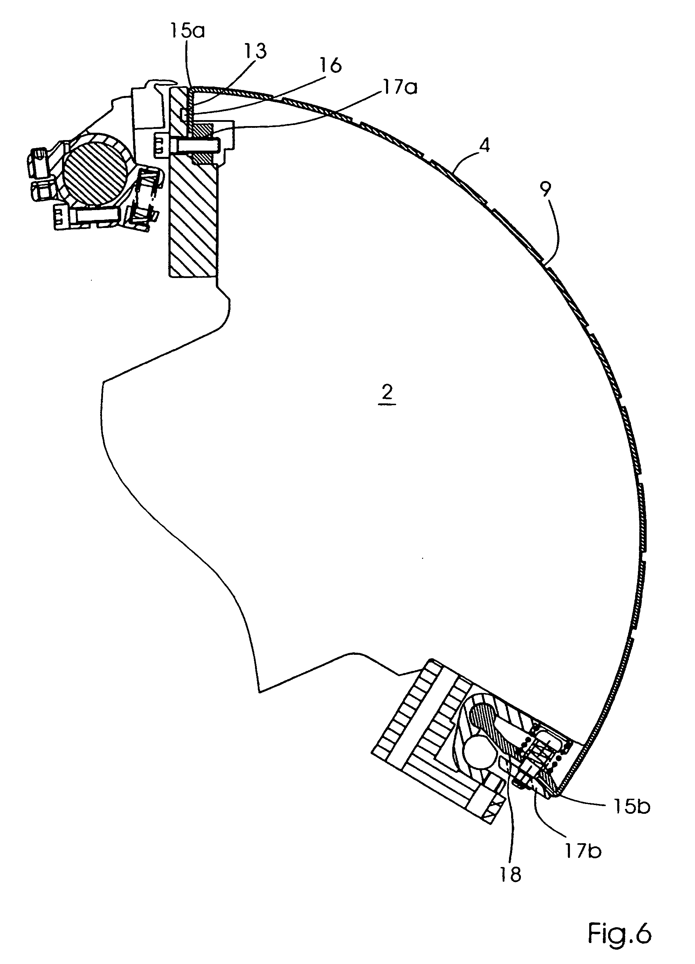

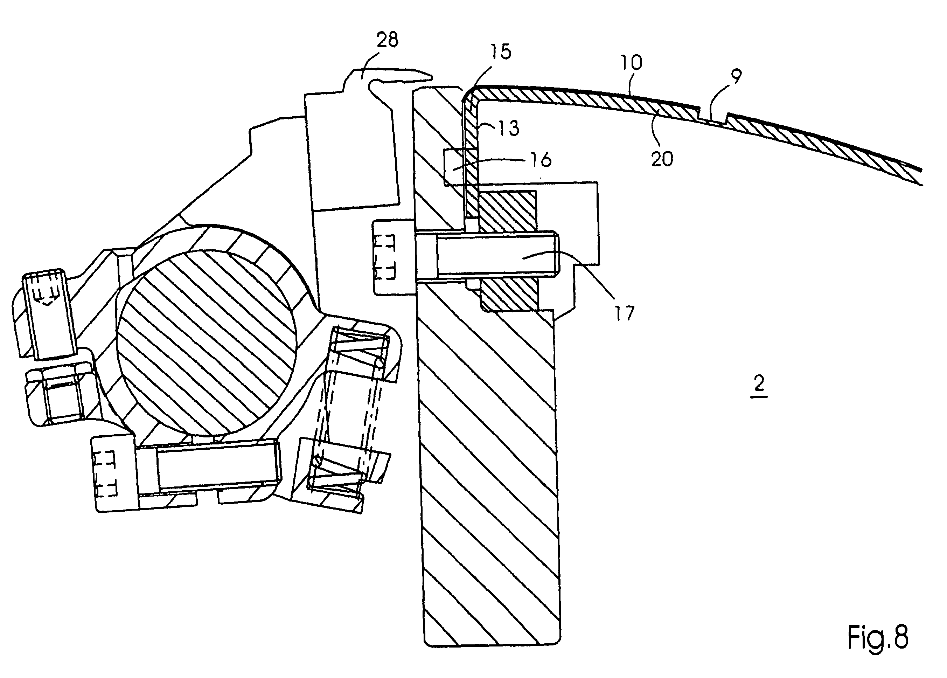

In den Figuren 6 und 8 ist eine Halte- und Spanneinrichtung dargestellt, welche eine vordere Klemmeinrichtung 17a zum Festklemmen der vorderen Abkantung 15a und eine hintere Klemmeinrichtung 17b zum Festklemmen der hinteren Abkantung 15b am Gegendruckzylinder 2 umfasst. Die hintere Klemmeinrichtung 17b ist an einem hebelförmigen, schwenkbaren Spannelement 18 angebracht, mittels welchem die Stanz- und Rill-Gegendruckplatte 4 auf den Gegendruckzylinder 2 in Umfangsrichtung straff aufgezogen und gespannt werden kann. Der vorderen Klemmeinrichtung 17a ist ein Anschlag 16 für die seitliche Anschlagfläche 14 zugeordnet. Mit dem Bezugszeichen 28 ist in Figur 8 ein in Zylinderumfangsrichtung unmittelbar vor der vorderen Klemmeinrichtung 17a angeordnetes Greifersystem zum Einklemmen des Bedruckstoffes 8 bezeichnet.

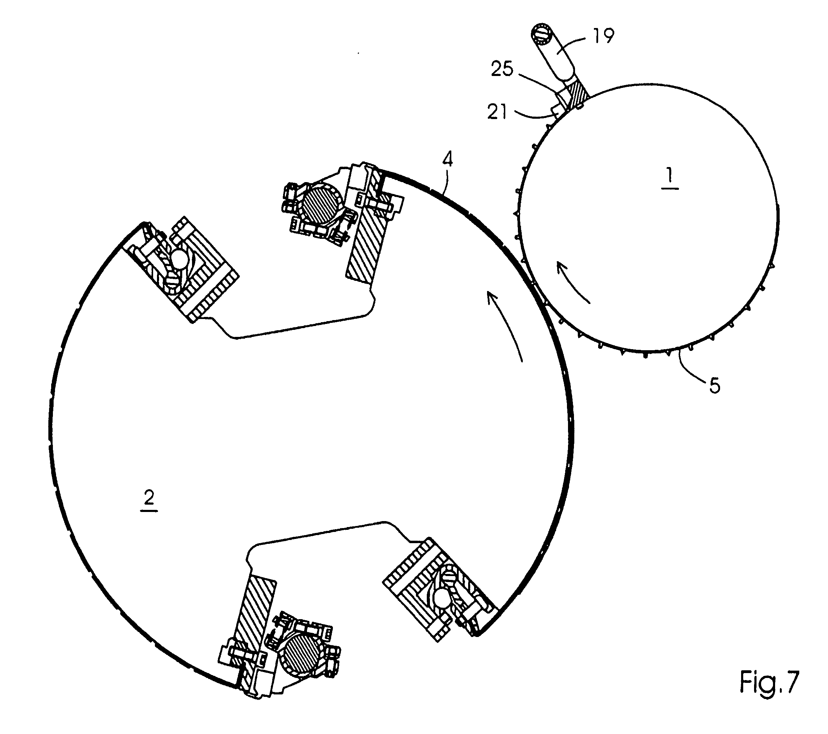

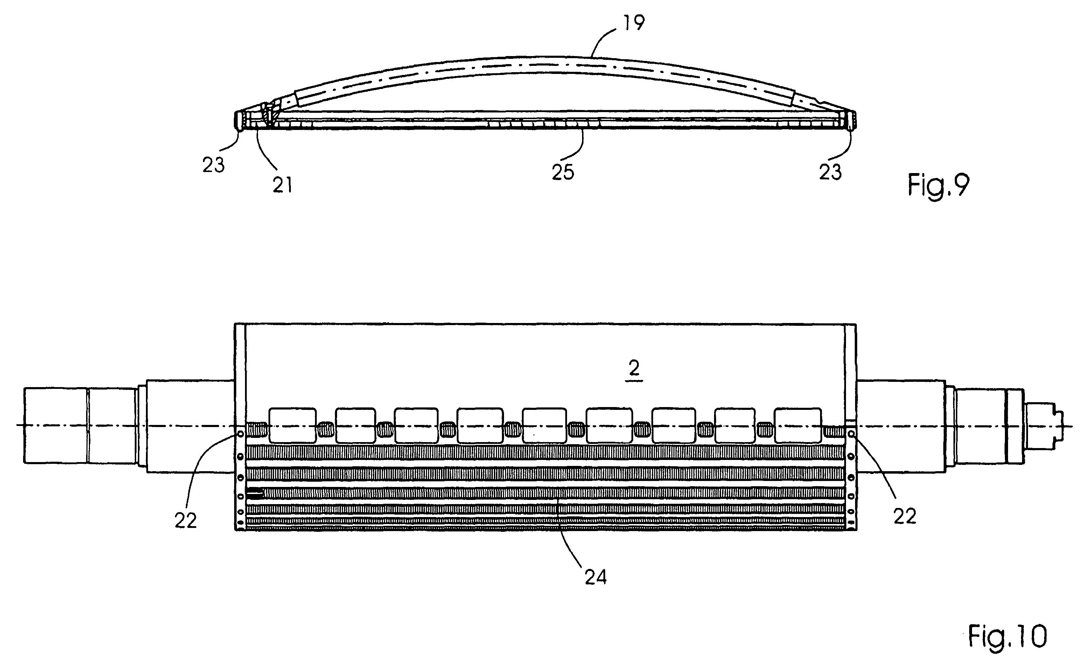

In den Figuren 7, 9 und 10 ist eine Positionierungs-Hilfseinrichtung 19 mit einem Positionierungs-Lineal 25 dargestellt, welche über Indexstifte 23, die an den Enden der Positionierungs-Hilfseinrichtung 19 angebracht sind, zum Zwecke einer Positionierung der Stanz- und Rill-Werkzeugplatte 5 auf dem Werkzeugzylinder 1 mit letzteren zeitweise zusammengesteckt werden kann. Der Werkzeugzylinder 1 ist dazu an jedem seiner Enden mit einer sich in Umfangsrichtung erstreckenden Reihe Indexlöcher 22 für die Indexstifte 23 ausgestattet. Die Funktion der Positionierungs-Hilfseinrichtung 19 ist folgende: Nachdem die Positionierungs-Hilfseinrichtung 19 in den dem gewünschten Umfangsregister entsprechend ausgewählten der Indexlöcher 22 auf den Werkzeugzylinder 1 zu diesem achsparallel aufgesteckt ist, wird die Stanz- und Rill-Werkzeugplatte 5 mit ihrer Vorderkante 11 über deren gesamte Kantenlänge gleichmäßig an das Positionierungs-Lineal 25 angelegt. Durch ein nachfolgendes Verschieben der Stanz- und Rill-Werkzeugplatte 5 entlang des Positionierungs-Lineals 25, welches hierbei als Führung für die Vorderkante 11 dient, in eine Endlage wird das Seitenregister der Stanz- und Werkzeugplatte 5 voreingestellt. Die Endlage ist durch das Anliegen der Seitenkante 12 an einem Seitenanschlag 21 der Positionierungs-Hilfseinrichtung 19 bestimmt. Erst danach wird die Stanz- und Rill-Gegendruckplatte über ihre gesamte Plattenfläche hinweg gegen den Werkzeugzylinder 1 gedrückt, welcher als ein Magnetzylinder ausgebildet ist. Der Werkzeugzylinder 1 weist eine mit einem magnetisch wirksamen Material beschichtete oder vorzugsweise mit Magneten 24 (Elektro- oder vorzugsweise Permanentmagnete) besetzte Umfangsoberfläche auf. Die Magnete 24 halten die Stanz- und Rill-Werkzeugplatte 5 auf dem Werkzeugzylinder 1 in der registergenauen Arbeitsposition fest.

### Bezugszeichenliste

- 1: Werkzeugzylinder
- 2: Gegendruckzylinder
- 3: Bogentransportzylinder
- 4: Stanz- und Rill-Gegendruckplatte (Aluminiumblech)
- 5: Stanz- und Rill-Werkzeugplatte
- 6: Stanz-Linie
- 7: Rill-Linie
- 8: Bedruckstoff
- 9: Rill-Nut
- 10: Deckschicht
- 11: Vorderkante
- 12: Seitenkante
- 13: Anschlagfläche (vordere)
- 14: Anschlagfläche (seitliche)
- 15a: Abkantung (vordere)
- 15b: Abkantung (hintere)
- 16: Anschlag
- 17a: Klemmeinrichtung (vordere)
- 17b: Klemmeinrichtung (hintere)
- 18: Spannelement
- 19: Positionierungs-Hilfseinrichtung
- 20: Trägerschicht
- 21: Seitenanschlag
- 22: Registerloch
- 23: Registerstift
- 24: Magnet
- 25: Positionierungs-Lineal
- 26: Maschine
- 27: Oberfläche
- 28: Greifersystem
- a: Stanz-Linien-Höhe
- b: Rill-Linien-Höhe
- c: Boden-Dicke
- d: Deckschicht-Dicke
- e: Bedruckstoff-Dicke
- f: Platten-Dicke
- g: Rill-Nuten-Breite
- h: Rill-Linien-Breite

## Patentansprüche

1. Stanz- und Rill-Gegendruckplatte (4), die aus einem Aluminiumblech (4) hergestellt ist und eine Platten-Dicke (f) sowie mindestens eine Rill-Nut (9) aufweist,
**dadurch gekennzeichnet,**
**dass** die Nuttiefe der Rill-Nut (9) geringer als die Platten-Dicke (f) ist, so dass die Rill-Nut (9) einen Nutboden mit einer Boden-Dicke (c) aufweist, die mindestens 0,1 Millimeter beträgt, und
**dass** das Aluminiumblech (4) eine hartanodisierte Deckschicht (10) aufweist.

2. Stanz- und Rill-Gegendruckplatte (4) nach Anspruch 1,
**dadurch gekennzeichnet,**
**dass** die Härte der Deckschicht (10) mindestens 350 HV 0,05 beträgt.

3. Stanz- und Rill-Gegendruckplatte (4) nach Anspruch 1 oder 2,
**dadurch gekennzeichnet,**
**dass** die Dicke (d) der Deckschicht (10) mindestens 10 µm beträgt.

4. Verfahren zur Herstellung einer Stanz- und Rill-Gegendruckplatte (4) aus einem Metallblech, wobei ein Aluminiumblech (4) als das Metallblech verwendet wird,
**dadurch gekennzeichnet,**
**dass** das Aluminiumblech (4) durch Hartanodisieren mit einer Deckschicht (10) versehen wird und
**dass** eine Rill-Nut (9) so tief in das Aluminiumblech (4) eingebracht wird, dass die Rill-Nut (9) die Deckschicht (10) vollständig und eine unter der Deckschicht (10) liegende Trägerschicht (20) nur unvollständig durchdringt.

5. Verfahren nach Anspruch 4,
**dadurch gekennzeichnet,**
**dass** die Rill-Nut (9) durch Fräsen in das Aluminiumblech (4) eingebracht wird.

6. Maschine (26) zum Bearbeiten eines Bedruckstoffs (8), mit einer Stanz- und Rill-Gegendruckplatte (4),
**dadurch gekennzeichnet,**
**dass** die Stanz- und Rill-Gegendruckplatte (4) nach einem der Ansprüche 1 bis 3 ausgebildet und/oder einem der Ansprüche 4 und 5 hergestellt ist.

7. Verfahren zum Stanzen und Rillen eines Bedruckstoffs (8),
**dadurch gekennzeichnet,**
**dass** zum Stanzen und Rillen des Bedruckstoffs (8) eine nach einem der Ansprüche 1 bis 3 ausgebildete und/oder einem der Ansprüche 4 und 5 hergestellte Stanz- und Rill-Gegendruckplatte (4) und/oder eine nach Anspruch 6 ausgebildete Maschine (26) verwendet wird.

8. Verfahren nach Anspruch 7,
**dadurch gekennzeichnet,**
**dass** es als ein rotatives Bearbeitungsverfahren ausgeführt wird, bei welchem die Stanz- und Rill-Gegendruckplatte (4) rotiert.

9. Verfahren nach Anspruch 7 oder 8,
**dadurch gekennzeichnet,**
**dass** als der Bedruckstoff (8) ein Bedruckstoffbogen verwendet wird.

## Claims

1. Punching and scoring backing plate (4) made of an aluminium plate (4) and having a plate thickness (f) and at least one scoring groove (9),
**characterized in**
**that** the groove depth of the scoring groove (9) is smaller than the plate thickness (f), so that the scoring groove (9) has a groove base with a base thickness (c) of at least 0.1 mm, and
**that** the aluminium plate (4) has a hard-anodized top layer (10).

2. Punching and scoring backing plate (4) according to claim 1,
**characterized in**
**that** the hardness of the top layer (10) is at least 350 HV 0.05.

3. Punching and scoring backing plate (4) according to claim 1 or 2,
**characterized in**
**that** the thickness (d) of the top layer (10) is at least 10 µm.

4. Method of producing a punching and scoring backing plate (4) from a metal sheet, an aluminium sheet (4) being used as the metal sheet,
**characterized in**
**that** the aluminium plate (4) is provided with a top layer (10) by hard-anodizing, and
**that** a scoring groove (9) is formed in the aluminium sheet (4) to such a depth that the scoring groove (9) completely penetrates the top layer (10) and only partially penetrates a carrier layer (20) located underneath the top layer (10).

5. Method according to claim 4,
**characterized in**
**that** the scoring groove (9) is formed in the aluminium plate (4) by milling.

6. Machine (26) for processing a printing material (8), including a punching and scoring backing plate (4),
**characterized in**
**that** the punching and scoring backing plate (4) is constructed in accordance with one of claims 1 to 3 and/or produced in accordance with one of claims 4 and 5.

7. Method of punching and scoring a printing material (8),
**characterized in**
**that** a punching and scoring backing plate (4) constructed in accordance with one of claims 1 to 3 and/or produced in accordance with one of claims 4 and 5 and/or a machine (26) constructed in accordance with claim 6 is used to punch and score the printing material (8).

8. Method according to claim 7
**characterized in**
**that** the method is carried out as a rotational processing method, wherein the punching and scoring backing plate (4) rotates.

9. Method according to claim 7 or 8,
**characterized in**
**that** a sheet of printing material is used as the printing material (8).

## Revendications

1. Matrice pour la coupe et le rainurage (4), qui est fabriquée dans une tôle d'aluminium (4) et présente une épaisseur de plaque (f) et au moins une rainure à gorge (9), **caractérisée en ce que** la profondeur de rainure de la rainure à gorge (9) est plus faible que l'épaisseur de plaque (f), de sorte que la rainure à gorge (9) présente un fond de rainure avec une épaisseur de fond (c), qui est d'au moins 0,1 millimètre, et **en ce que** la tôle d'aluminium (4) présente une couche de revêtement (10) à anodisation dure.

2. Matrice pour la coupe et le rainurage (4) selon la revendication 1, **caractérisée en ce que** la dureté de la couche de revêtement (10) est d'au moins 350 HV 0,05.

3. Matrice pour la coupe et le rainurage (4) selon la revendication 1 ou 2, **caractérisée en ce que** l'épaisseur (d) de la couche de revêtement (10) est d'au moins 10 µm.

4. Procédé pour la fabrication d'une matrice pour la coupe et le rainurage dans une tôle de métal, une tôle d'aluminium (4) étant utilisée comme tôle de métal, **caractérisée en ce que** la tôle d'aluminium (4) est dotée par anodisation dure d'une couche de revêtement (10), et **en ce qu'**une rainure à gorge (9) est réalisée si profondément dans la tôle d'aluminium (4) que la rainure à gorge (9) pénètre complètement la couche de revêtement (10) et seulement de façon incomplète une couche support (20) située sous la couche de revêtement (10).

5. Procédé selon la revendication 4, **caractérisé en ce que** la rainure à gorge (9) est introduite par fraisage dans la tôle d'aluminium (4).

6. Machine (26) pour le traitement d'un tissu d'impression (8), comprenant une matrice pour la coupe et le rainurage (4), **caractérisée en ce que** la matrice pour la coupe et le rainurage (4) est conçue selon l'une quelconque des revendications 1 à 3 et/ou est fabriquée selon l'une quelconque des revendications 4 et 5.

7. Procédé pour la coupe et le rainurage d'un produit d'impression (8), **caractérisé en ce que** pour la coupe et le rainurage du produit d'impression (8), on utilise une matrice pour la coupe et le rainurage (4) conçue selon l'une quelconque des revendications 1 à 3 et/ou fabriquée selon l'une quelconque des revendications 4 et 5 et/ou une machine (26) conçue selon la revendication 6.

8. Procédé selon la revendication 7, **caractérisé en ce qu'**il est mis en oeuvre comme un procédé d'usinage rotatif, dans lequel la matrice pour la coupe et le rainurage (4) est en rotation.

9. Procédé selon la revendication 7 ou 8, **caractérisé en ce qu'**une feuille de produit d'impression est utilisée comme produit d'impression (8).
